# EUROPEAN PATENT APPLICATION

(11) **EP 4 799 869 A1**
(43) Date of publication of application: **02.09.2026**
(21) Application number: 24880991.5
(22) Date of filing: 14.05.2024
(51) Int. Cl.: B60R 16/023, G01S 15/04

(54) **VEHICLE WADE SENSING SYSTEM, METHOD AND DEVICE, AND VEHICLE**

(30) Priority: 27.10.2023 CN 202311418856
(71) Applicant: BYD Company Limited, Shenzhen, Guangdong 518118 (CN)
(72) Inventor: SONG, Gan, Shenzhen, Guangdong 518118 (CN); LI, Linke, Shenzhen, Guangdong 518118 (CN); ZHANG, Junge, Shenzhen, Guangdong 518118 (CN)
(74) Representative: Mathys & Squire
(86) International application number: PCT/CN2024/093169
(87) International publication number: WO 2025/086612

(57) **Abstract**

A vehicle, provided with a wade sensing system, method and device. The system includes ultrasonic sensors and a controller, wherein the controller is configured to, on the basis of scattered echoes in echoes received by the ultrasonic sensors, determine that a vehicle body is wading.

## Description

### FIELD

The present disclosure relates to the technical field of vehicle electronics, and in particular, to a vehicle wading sensing system, method, device and vehicle.

### BACKGROUND

With the continuous development of science and technology, people have put forward higher requirements for the use safety of vehicles in many dangerous scenarios. For example, in the scenario where a vehicle is immersed in water, the relevant countermeasures include shutting down the engine, starting the escape means, etc. However, how to accurately identify vehicle wading is a key problem. In the related art, a plurality of ultrasonic sensors are arranged at the front and rear positions of the bumpers of the vehicle, and the plurality of ultrasonic sensors are distributed in a vertical downward array. When the ultrasonic sensors are not immersed in water, the height of the water surface below the sensors from the sensors can be detected by the ultrasonic signal reflection echoes, and then the depth of the vehicle body immersed in water can be calculated in combination with the installation height of the sensors themselves. However, in cases where the ultrasonic sensors are immersed in water, the reflection echoes cannot be formed, that is, the ultrasonic sensors are disabled, and the vehicle wading cannot be accurately identified, which poses certain safety risks.

### SUMMARY

An object of embodiments of the present disclosure is to provide a new solution for identifying vehicle wading.

According to a first aspect of the present disclosure, an embodiment of a vehicle wading sensing system is provided. The system includes:
an ultrasonic sensor, the ultrasonic sensor being configured to transmit ultrasonic waves and receive ultrasonic echoes; and
a controller, the controller being configured to determine that a vehicle body is wading according to scattered echoes in the echoes received by the ultrasonic sensor.

In an embodiment, the controller is configured to determine that the vehicle body is wading when a proportion of the scattered echoes in the echoes received by the ultrasonic sensor is greater than a threshold.

In an embodiment, the ultrasonic sensor is installed parallel to a horizontal reference plane of the vehicle.

In an embodiment, the wading sensing system includes at least one sensor group, and the sensor group includes at least two ultrasonic sensors arranged on the same side of the vehicle body, and each ultrasonic sensor in the same sensor group has the same installation height.

In an embodiment, the wading sensing system includes at least one sensor group from a forward sensor group and a rearward sensor group, the forward sensor group includes at least two ultrasonic sensors arranged on a front side of the vehicle body, and the rearward sensor group includes at least two ultrasonic sensors arranged on a rear side of the vehicle body.

In an embodiment, the controller is configured to when the sensor group is in a sensor self-transmission and self-reception operating mode, if the proportion of the scattered echoes in the echoes received by the ultrasonic sensor in the sensor group is greater than or equal to a first threshold, determine that the ultrasonic sensor is wading; and
the controller is configured to when a number of ultrasonic sensors wading in the sensor group is greater than or equal to a number threshold, determine that the vehicle body is wading, wherein the number threshold is less than or equal to the number of ultrasonic sensors in the sensor group.

In an embodiment, the number threshold is greater than or equal to half of the number of ultrasonic sensors in the sensor group.

In an embodiment, when the sensor group is in a sensor self-transmission and other-reception operating mode, a first ultrasonic sensor in the sensor group transmits ultrasonic waves, and other ultrasonic sensors receive echoes of the ultrasonic waves transmitted by the first ultrasonic sensor; and
the controller is configured to determine that the first ultrasonic sensor is wading according to scattered echoes in the echoes received by the other ultrasonic sensors; and the controller is configured to when the number of ultrasonic sensors wading in the sensor group is greater than or equal to a number threshold, determine that the vehicle body is wading; wherein the number threshold is less than or equal to the number of ultrasonic sensors in the sensor group.

In an embodiment, when the sensor group is in a sensor self-transmission and self-reception operating mode, an operating mode of the sensor group is switched from the sensor self-transmission and self-reception operating mode to the sensor self-transmission and other-reception operating mode when the first ultrasonic sensor exists; and the first ultrasonic sensor is a sensor in which the proportion of the scattered echoes in the received echoes is greater than or equal to the first threshold in the sensor self-transmission and self-reception operating mode.

In an embodiment, the controller is configured to determine that the first ultrasonic sensor is wading when the proportion of the scattered echoes in the echoes received by any one of the other ultrasonic sensors is greater than or equal to a second threshold.

In an embodiment, when the number of first ultrasonic sensors determined to be wading is less than the number threshold, a second ultrasonic sensor in the sensor group transmits ultrasonic waves, and other ultrasonic sensors receive echoes of the ultrasonic waves transmitted by the second ultrasonic sensor; wherein the second ultrasonic sensor is a sensor in which the proportion of the scattered echoes in the received echoes is less than the first threshold in the sensor self-transmission and self-reception operating mode; and
the controller is configured to determine that the second ultrasonic sensor is wading when the proportion of the scattered echoes in the echoes received by any one of the other ultrasonic sensors is greater than or equal to the second threshold.

According to a second aspect of the present disclosure, an embodiment of a wading sensing method is provided. The method includes:
echoes of an ultrasonic sensor are received; wherein the ultrasonic sensor is configured to transmit ultrasonic waves and receive echoes of the ultrasonic waves; and
that the vehicle body is wading is determined according to scattered echoes in the echoes.

According to a third aspect of the present disclosure, an embodiment of a wading sensing device is provided. The device includes a memory and a processor, the memory stores executable instructions, the instructions are configured to control the processor to perform the wading sensing method according to the second aspect.

According to a fourth aspect of the present disclosure, an embodiment of a vehicle is provided. The vehicle includes the wading sensing system according to the first aspect, or the wading sensing device according to the third aspect.

### BRIEF DESCRIPTION OF THE DRAWINGS

The accompanying drawings, which are incorporated into and constitute a part of this specification, illustrate an embodiment of the present disclosure and, together with the description, serve to explain the principles of the application.
FIG. 1 is a schematic diagram of a composition structure of a vehicle wading sensing system according to some embodiments;
FIG. 2 is a schematic diagram (1) for installing a sensor group according to some embodiments;
FIG. 3 is a schematic diagram (2) for installing a sensor group according to some embodiments;
FIG. 4 is a schematic diagram (1) of a vehicle body wading according to some embodiments;
FIG. 5 is a schematic diagram (2) of a vehicle body wading according to other embodiments;
FIG. 6 is a schematic flow diagram of a wading sensing method according to some embodiments;
FIG. 7 is a schematic flow diagram of a wading sensing method according to other embodiments;
FIG. 8 is a structural schematic diagram of a wading sensing device according to some embodiments;
FIG. 9 is a structural schematic diagram of a vehicle according to some embodiments;
FIG. 10 is a structural schematic diagram of a vehicle according to other embodiments.

### DETAILED DESCRIPTION

Various exemplary embodiments of the invention will now be described in detail with reference to the accompanying drawings. It will be noted that the relative arrangements of components and steps, numerical expressions, and numerical values set forth in these examples do not limit the scope of the present invention unless specifically stated otherwise.

The following description of at least one exemplary embodiment is merely illustrative in practice and is in no way intended to limit the present invention and its application or use.

Techniques, methods, and devices known to a person skilled in the relevant art may not be discussed in detail, but will be regarded as part of the specification where appropriate.

In all examples shown and discussed herein, any specific values will be construed as merely exemplary and not as limiting. Accordingly, other examples of exemplary embodiments may have different values.

It will be noted that like reference numerals and letters refer to like items in the following drawings, and therefore, once an item is defined in one drawing, it is not necessary to further discuss it in the following drawings.

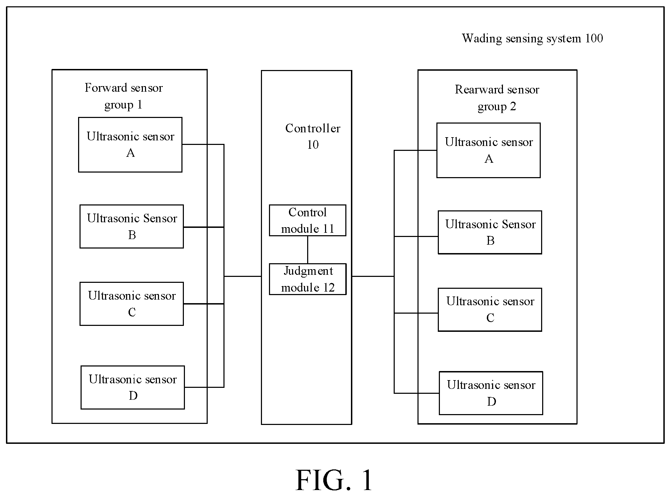

An embodiment of the present disclosure relates to a vehicle wading sensing solution for determining that a vehicle body is wading according to scattered echoes in ultrasonic echoes. FIG. 1 shows a schematic diagram of a composition structure of a vehicle wading sensing system according to some embodiments. As shown in FIG. 1, the wading sensing system according to the embodiment of the present disclosure may include an ultrasonic sensor.

In some embodiments, the wading sensing system may include a single ultrasonic sensor, for example, ultrasonic sensor A or ultrasonic sensor B.

In other embodiments, the wading sensing system may also include a plurality of ultrasonic sensors, for example, ultrasonic sensor A, ultrasonic sensor B, ultrasonic sensor C, and ultrasonic sensor D.

A person skilled in the art will understand that no limitation is imposed herein on the number of ultrasonic sensors included in the wading sensing system.

The wading sensing system may further include a controller 10.

In some embodiments, as shown in FIG. 1, the controller 10 may be a separate controller. That is, the controller 10 and the ultrasonic sensor may be two independent devices, and the controller 10 is communicatively connected to the ultrasonic sensor. The controller 10 may control the operating mode of the ultrasonic sensor.

In other embodiments, the controller 10 may be integrated into the ultrasonic sensor, that is, the controller 10 within the ultrasonic sensor may control the operating mode of the ultrasonic sensor.

In some embodiments, the operating mode of the ultrasonic sensor is categorized into a self-transmission and self-reception operating mode as well as a self-transmission and other-reception operating mode.

In an embodiment corresponding to the wading sensing system including a single ultrasonic sensor, the controller 10 may control the single ultrasonic sensor to be in the self-transmission and self-reception operating mode, that is, the single ultrasonic sensor itself transmits an ultrasonic signal outward and receives a returned echo signal.

In an embodiment corresponding to the wading sensing system including a plurality of ultrasonic sensors, the controller 10 may control the plurality of ultrasonic sensors to be in the self-transmission and other-reception operating mode. That is, any one of the plurality of ultrasonic sensors transmits an ultrasonic signal, and one or more of the other ultrasonic sensors receive an echo signal of the ultrasonic wave. Alternatively, the controller 10 may control the plurality of ultrasonic sensors to be in the self-transmission and self-reception operating mode.

A person skilled in the art will understand that no limitation is imposed herein on the number of ultrasonic sensors or the operating modes thereof.

Regardless of the operating mode of the ultrasonic sensor, the controller 10 may receive the echoes received by the ultrasonic sensor to determine whether the vehicle body is wading.

Specifically, after receiving an echo, the ultrasonic sensor may convert the echo into an electrical signal. The controller 10 may receive the electrical signal corresponding to the echo received by the ultrasonic sensor, so as to determine whether the vehicle body is wading.

In some embodiments, the controller 10 may include a control module 11 and a judgment module 12.

The control module 11 is configured to control the operating mode of the ultrasonic sensor, and the judgment module 12 is configured to receive an electrical signal corresponding to an echo received by the ultrasonic sensor, so as to determine whether the vehicle body is wading.

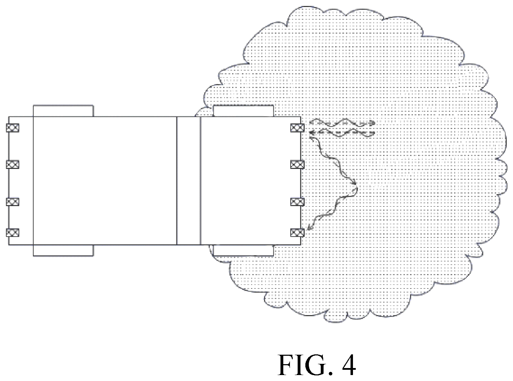

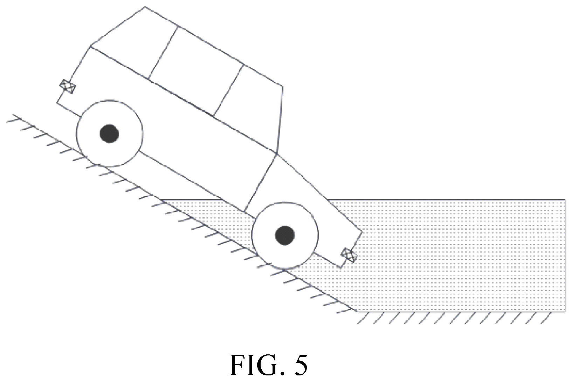

The echoes received by the ultrasonic sensor include reflected echoes and scattered echoes. A scattered echo is an echo generated according to a scattering effect, and a reflected echo is an echo generated according to a reflection effect. When the ultrasonic sensor is not immersed in a water body, that is, when the ultrasonic sensor is in an air medium, since the reflection effect of the air medium is strong, the scattering effect is extremely weak, and the scattering signal is extremely weak, the scattered echoes in the echoes are weak. As shown in FIGS. 4 and 5, when the ultrasonic sensor is immersed in a water body, that is, when the ultrasonic sensor is in a water medium, since the water medium is significantly denser than the air medium and impurities exist in the water, the reflection effect of the water medium is relatively weak, the scattering effect is strong, and the scattered echoes in the echoes are significantly enhanced.

In some embodiments, the controller is configured to determine that the vehicle body is wading according to scattered echoes in the echoes received by the ultrasonic sensor.

In the embodiment, the controller 10 is communicatively connected to the ultrasonic sensor. The controller 10 receives the echoes received by the ultrasonic sensor, and determines that the vehicle body is wading according to scattered echoes in the echoes, when the operating mode of the ultrasonic sensor is determined.

In some embodiments, the controller 10 may first determine that the operating mode of the ultrasonic sensor is the self-transmission and self-reception mode. Upon receiving the echoes in which the scattered echoes are significantly enhanced, the controller 10 may switch the operating mode of the ultrasonic sensor from the self-transmission and self-reception mode to the self-transmission and other-reception mode.

In some embodiments, the controller 10 is configured to determine that the vehicle body is wading when the proportion of the scattered echoes in the echoes received by the ultrasonic sensor is greater than a threshold.

In the embodiment, the ultrasonic sensor may convert the received echoes into electrical signals. The controller 10 may determine the proportion of scattered echoes in the echoes according to the electrical signals corresponding to the echoes.

The proportion of scattered echoes may be an energy proportion of the scattered echoes in the echoes. When the energy proportion of the scattered echoes in the echoes is greater than a threshold, it is determined that the vehicle body is wading.

For example, the energy proportion of the scattered echoes in the echoes may be reflected by the waveform of the electrical signal corresponding to the echoes. When significant noise is present in the waveform, it indicates that the energy proportion of the scattered echoes in the echoes is relatively large, and it is determined that the vehicle body is wading. When weak noise is present in the waveform, it indicates that the energy proportion of the scattered echoes in the echoes is relatively small, and it is determined that the vehicle body is not wading.

The proportion of scattered echoes may also be an amplitude proportion of the scattered echoes in the echoes. When the amplitude proportion of the scattered echoes in the echoes is greater than a threshold, it is determined that the vehicle body is wading. The amplitude may be the maximum amplitude, an average amplitude, a total amplitude, or the like, and no limitation is imposed herein.

For example, when a proportion of the maximum amplitude of the scattered echoes to the maximum amplitude of the echoes is greater than a threshold, it is determined that the vehicle body is wading.

A person skilled in the art will understand that the descriptions herein are merely exemplary and are not to be construed as limiting the present disclosure.

The wading sensing system according to the embodiments of the present disclosure includes an ultrasonic sensor and a controller. The ultrasonic sensor is configured to transmit ultrasonic waves and receive ultrasonic echoes; and the controller is configured to determine that a vehicle body is wading according to scattered echoes in the echoes received by the ultrasonic sensor. This allows for judging whether a vehicle body is wading according to scattered echoes in the echoes, thereby avoiding the problem that the ultrasonic sensor is disabled due to being immersed in water when detecting the vehicle body wading through reflected echoes in the related art, improving the accuracy of wading sensing and improving the safety of the vehicle.

In some embodiments, the ultrasonic sensor is installed parallel to a horizontal reference plane of the vehicle.

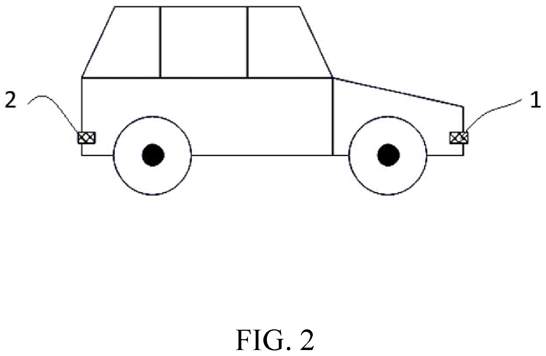

In the embodiment, as shown in FIG. 2, the ultrasonic sensor is installed parallel to a horizontal reference plane of the vehicle. The ultrasonic sensor for implementing the embodiments of the present disclosure may be an existing mass-produced ultrasonic sensor at front and rear positions of front and rear bumpers of a vehicle, or may be an additionally arranged ultrasonic sensor. No limitation is imposed herein.

According to the embodiments of the present disclosure, the ultrasonic sensor is installed parallel to a horizontal reference plane of the vehicle, thereby facilitating compatibility with existing ultrasonic sensors arranged at positions of front and rear bumpers of a vehicle body, reducing manufacturing costs, lowering system complexity, and thereby enhancing market promotion and application.

In some embodiments, the wading sensing system includes at least one sensor group. The sensor group includes at least two ultrasonic sensors arranged on the same side of a vehicle body, and each ultrasonic sensor in the same sensor group has the same installation height.

In the embodiment, each sensor group includes four ultrasonic sensors. The four ultrasonic sensors may be arranged at one of a front side, a rear side, a left side, and a right side of a vehicle body. No limitation is imposed herein.

The four ultrasonic sensors have the same installation height relative to the horizontal reference plane of the vehicle.

A person skilled in the art will understand that no limitation is imposed herein on the number of ultrasonic sensors included in each sensor group.

In some embodiments, the wading sensing system includes at least one sensor group from a forward sensor group and a rearward sensor group. The forward sensor group includes at least two ultrasonic sensors arranged on a front side of the vehicle body, and the rearward sensor group includes at least two ultrasonic sensors arranged on a rear side of the vehicle body.

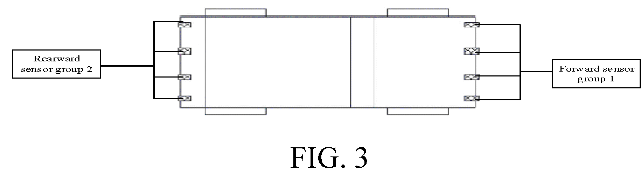

In the embodiment, as shown in FIGS. 2 and 3, the wading sensing system may include at least one sensor group from a forward sensor group 1 and a rearward sensor group 2. The forward sensor group 1 includes four ultrasonic sensors arranged on a front side of a vehicle body, and the rearward sensor group 2 includes four ultrasonic sensors arranged on a rear side of the vehicle body. The four ultrasonic sensors are ultrasonic sensor A, ultrasonic sensor B, ultrasonic sensor C, and ultrasonic sensor D, respectively.

In other embodiments, the number of forward ultrasonic sensors and the number of rearward ultrasonic sensors may also be different. No limitation is imposed herein.

In some embodiments, the controller is configured to when the sensor group is in a sensor self-transmission and self-reception operating mode, if the proportion of the scattered echoes in the echoes received by the ultrasonic sensor in the sensor group is greater than or equal to a first threshold, determine that the ultrasonic sensor is wading; and the controller is configured to when the number of ultrasonic sensors wading in the sensor group is greater than or equal to a number threshold, determine that the vehicle body is wading, wherein the number threshold is less than or equal to the number of ultrasonic sensors in the sensor group.

In the embodiment, the controller 10 may control each ultrasonic sensor in the sensor group to be in the self-transmission and self-reception operating mode. In other words, each ultrasonic sensor in the sensor group receives echoes of the ultrasonic wave transmitted by itself.

The first threshold may be a critical value set for the self-transmission and self-reception operating mode for judging whether an ultrasonic sensor is wading. The first threshold may be set by observing an actual proportion range of scattered echoes in echoes when the sensor is wading in the self-transmission and self-reception operating mode. No limitation is imposed herein.

Taking the forward sensor group including four ultrasonic sensors as an example, the four ultrasonic sensors are ultrasonic sensor A, ultrasonic sensor B, ultrasonic sensor C, and ultrasonic sensor D, respectively. The controller is communicatively connected to the four ultrasonic sensors respectively to receive electrical signals corresponding to the echoes received by them. The controller 10 may determine the proportion of scattered echoes in the echoes according to the electrical signals corresponding to the echoes. If the proportion of the scattered echoes in the echoes received by ultrasonic sensor A or ultrasonic sensor C is greater than or equal to the first threshold, it is determined that ultrasonic sensor A or ultrasonic sensor C is wading.

The number threshold may be set corresponding to the number of ultrasonic sensors in the sensor group.

For example, when the forward sensor group includes four ultrasonic sensors, the number threshold may be set to 1, 2, or 3, and the like. A person skilled in the art will understand that no specific limitation is imposed herein on the number threshold.

Continuing with the above example, if the number threshold is 1, then it is determined that the vehicle body is wading upon determining that ultrasonic sensor A or ultrasonic sensor C is wading.

In some embodiments, the number threshold is greater than or equal to half of the number of ultrasonic sensors in the sensor group.

Continuing with the above example, when the forward sensor group includes four ultrasonic sensors, if the number threshold is 3, then it is determined that the vehicle body is wading when the ultrasonic sensors wading in the forward sensor group are ultrasonic sensor A, ultrasonic sensor B, and ultrasonic sensor C. A schematic diagram of vehicle body wading in this case may be, for example, as shown in FIG. 4 or FIG. 5.

According to the embodiments of the present disclosure, the number threshold is greater than or equal to half of the number of ultrasonic sensors in the sensor group, and this configuration improves the accuracy and reliability of identifying vehicle body wading.

In some embodiments, when the sensor group is in a sensor self-transmission and other-reception operating mode, a first ultrasonic sensor in the sensor group transmits ultrasonic waves, and other ultrasonic sensors receive echoes of the ultrasonic waves transmitted by the first ultrasonic sensor; and
the controller is configured to determine whether the first ultrasonic sensor is wading according to scattered echoes in the echoes received by the other ultrasonic sensors; and the controller is configured to when the number of ultrasonic sensors wading in the sensor group is greater than or equal to a number threshold, determine that the vehicle body is wading; wherein the number threshold is less than or equal to the number of ultrasonic sensors in the sensor group.

In the embodiment, the controller 10 may control the sensor group to be in the self-transmission and other-reception operating mode. The first ultrasonic sensor may be at least one ultrasonic sensor in the sensor group. The first ultrasonic sensor may also be a sensor in which the proportion of the scattered echoes in the received echoes is greater than or equal to the first threshold in the self-transmission and self-reception operating mode. No limitation is imposed herein.

Taking the rearward sensor group including four ultrasonic sensors as an example, the four ultrasonic sensors are ultrasonic sensor A, ultrasonic sensor B, ultrasonic sensor C, and ultrasonic sensor D, respectively. The first ultrasonic sensor may be at least one of the four ultrasonic sensors. For example, in the self-transmission and other-reception operating mode, the first ultrasonic sensor is ultrasonic sensor A, ultrasonic sensor A transmits ultrasonic waves, the other ultrasonic sensors are ultrasonic sensor B, ultrasonic sensor C, and ultrasonic sensor D, and the other ultrasonic sensors receive echoes of the ultrasonic waves transmitted by ultrasonic sensor A. The first ultrasonic sensors may also be ultrasonic sensor B and ultrasonic sensor C, when ultrasonic sensor B transmits ultrasonic waves, the other ultrasonic sensors are ultrasonic sensor A, ultrasonic sensor C, and ultrasonic sensor D, and the other ultrasonic sensors receive echoes of the ultrasonic waves transmitted by ultrasonic sensor B. When ultrasonic sensor C transmits ultrasonic waves, the other ultrasonic sensors are ultrasonic sensor A, ultrasonic sensor B, and ultrasonic sensor D. The other ultrasonic sensors receive echoes of the ultrasonic waves transmitted by ultrasonic sensor C.

In the self-transmission and other-reception operating mode, the controller 10 may determine whether the first ultrasonic sensor is wading according to scattered echoes in the echoes received by the other ultrasonic sensors.

In some embodiments, the controller is configured to determine that the first ultrasonic sensor is wading when the proportion of the scattered echoes in the echoes received by any one of the other ultrasonic sensors is greater than or equal to a second threshold.

In the embodiment, if the first ultrasonic sensor is wading, then when the first ultrasonic sensor transmits ultrasonic waves, the other ultrasonic sensors may receive echoes of the ultrasonic waves transmitted by the first ultrasonic sensor within a set time. The set time can be a preset time, under a operating mode in which the sensor group is operated in the self-transmission and other-reception operating mode, corresponding to the first ultrasonic sensor being immersed in a water body, required from when the first ultrasonic sensor transmits ultrasonic waves to when any one of other ultrasonic sensors receives echoes of the ultrasonic waves transmitted by the first ultrasonic sensor. The set time may be determined according to distances between ultrasonic sensors included in the sensor group and a propagation speed of sound in a water medium.

The second threshold may be a critical value set for the self-transmission and other-reception operating mode for judging whether the first ultrasonic sensor is wading. The second threshold may be set by observing an actual proportion range of scattered echoes in echoes received by other sensors when a sensor is wading in the self-transmission and other-reception operating mode. No limitation is imposed herein. Continuing with the above example, in the self-transmission and other-reception operating mode, if the first ultrasonic sensor is ultrasonic sensor A and ultrasonic sensor A transmits ultrasonic waves, then it is determined that ultrasonic sensor A is wading when any one of ultrasonic sensor B, ultrasonic sensor C, and ultrasonic sensor D receives echoes within the set time and the proportion of the scattered echoes in the received echoes is greater than or equal to the second threshold. If the first ultrasonic sensor is ultrasonic sensor B and ultrasonic sensor B transmits ultrasonic waves, then it is determined that ultrasonic sensor B is wading when any one of ultrasonic sensor A, ultrasonic sensor C, and ultrasonic sensor D receives echoes within the set time and the proportion of the scattered echoes in the received echoes is greater than or equal to the second threshold.

The number threshold may be less than or equal to the number of ultrasonic sensors in the rearward sensor group. For example, it may be 1, 2, 3, or 4.

In the self-transmission and other-reception operating mode, if the number threshold is 1, the controller determines that the vehicle body is wading upon determining that at least one ultrasonic sensor in the rearward sensor group is wading.

In the self-transmission and other-reception operating mode, if the number threshold is 2, the controller determines that the vehicle body is wading upon determining that at least two ultrasonic sensors in the rearward sensor group are wading.

In the self-transmission and other-reception operating mode, if the number threshold is 3, the controller determines that the vehicle body is wading upon determining that at least three ultrasonic sensors in the rearward sensor group are wading.

In the self-transmission and other-reception operating mode, if the number threshold is 4, the controller determines that the vehicle body is wading upon determining that four ultrasonic sensors in the rearward sensor group are wading.

According to an embodiment of the present disclosure, it is controlled that the sensor group is in a sensor self-transmission and other-reception operating mode, the first ultrasonic sensor may be any ultrasonic sensor in the sensor group, and then it is determined whether the first ultrasonic sensor is wading according to scattered echoes in the echoes received by the other ultrasonic sensors, and when the number of ultrasonic sensors wading in the sensor group is greater than or equal to a number threshold, it is determined that the vehicle body is wading, so that misjudgment caused by the first ultrasonic sensor being obscured by mud or other media adhering to a surface of the vehicle body can be avoided, and the accuracy and reliability of the wading sensing system are improved.

In some embodiments, when the sensor group is in a sensor self-transmission and self-reception operating mode, the operating mode of the sensor group is switched from the sensor self-transmission and self-reception operating mode to the sensor self-transmission and other-reception operating mode when the first ultrasonic sensor exists; and the first ultrasonic sensor is a sensor in which the proportion of the scattered echoes in the received echoes is greater than or equal to the first threshold in the sensor self-transmission and self-reception operating mode.

In the embodiment, the controller 10 may, when the sensor group is in the self-transmission and self-reception operating mode, determine whether a first ultrasonic sensor in which the proportion of the scattered echoes in the received echoes is greater than or equal to the first threshold exists in the sensor group, according to scattered echoes in echoes received by each ultrasonic sensor in the sensor group. That is, the controller determines whether each ultrasonic sensor in the sensor group is wading.

When the sensor group is in the sensor self-transmission and self-reception operating mode, the operating mode of the sensor is switched from the sensor self-transmission and self-reception operating mode to the sensor self-transmission and other-reception operating mode when the first ultrasonic sensor exists. After switching to the self-transmission and other-reception operating mode, the first ultrasonic sensor transmits ultrasonic waves, and the other ultrasonic sensors receive echoes of the ultrasonic waves transmitted by the first ultrasonic sensor, thereby performing a re-check on whether the first ultrasonic sensor is wading according to whether the proportion of the scattered echoes in the echoes is greater than or equal to a second threshold.

In some embodiments, in the self-transmission and self-reception operating mode, if the proportion of the scattered echoes in the echoes received by ultrasonic sensor A and ultrasonic sensor B in the forward sensor group is greater than or equal to the first threshold, then the first ultrasonic sensors are ultrasonic sensor A and ultrasonic sensor B. The controller 10 may switch the operating mode of the forward sensor group from the sensor self-transmission and self-reception mode to the sensor self-transmission and other-reception mode. In the self-transmission and other-reception operating mode, the controller 10 may first control ultrasonic sensor A to transmit ultrasonic waves, and ultrasonic sensor B, ultrasonic sensor C, and ultrasonic sensor D receive echoes of the ultrasonic waves transmitted by ultrasonic sensor A. If any one of ultrasonic sensor B, ultrasonic sensor C, and ultrasonic sensor D receives echoes within the set time and the proportion of the scattered echoes in the received echoes is greater than or equal to the second threshold, then it is determined that ultrasonic sensor A is wading. Then, the controller 10 controls ultrasonic sensor B to transmit ultrasonic waves, and ultrasonic sensor A, ultrasonic sensor C, and ultrasonic sensor D receive echoes of the ultrasonic waves transmitted by ultrasonic sensor B. If any one of ultrasonic sensor A, ultrasonic sensor C, and ultrasonic sensor D receives echoes within the set time and the proportion of the scattered echoes in the received echoes is greater than or equal to the second threshold, then it is determined that ultrasonic sensor B is wading.

A person skilled in the art will understand that the description of two first ultrasonic sensors here is merely an example, and the number of first ultrasonic sensors may be one, three, four, or the like, and is not limited here.

Continuing with the above example, after switching to the self-transmission and other-reception mode, if it is determined that ultrasonic sensor A and ultrasonic sensor B are wading, that is., ultrasonic sensor A and ultrasonic sensor B are confirmed to be wading after performing a re-check, and when the number threshold is 2, that is, the number of first ultrasonic sensors wading is equal to the number threshold, then it is determined that the vehicle body is wading.

According to the embodiments of the present disclosure, when a first ultrasonic sensor exists in the sensor group, the operating mode of the sensor group is switched from the self-transmission and self-reception mode to the self-transmission and other-reception mode, and the re-check is performed to determine whether the first ultrasonic sensor is wading through the self-transmission and other-reception mode, so that misjudgment caused by the first ultrasonic sensor being obscured by mud or other media adhering to a surface of the vehicle body can be avoided, and the accuracy and reliability of the wading sensing system are improved.

In some embodiments, when the number of first ultrasonic sensors determined to be wading is less than the number threshold, a second ultrasonic sensor in the sensor group transmits ultrasonic waves and other ultrasonic sensors receive echoes of the ultrasonic waves transmitted by the second ultrasonic sensor, the controller is configured to determine that the second ultrasonic sensor is wading when the proportion of the scattered echoes in the echoes received by any one of the other ultrasonic sensors is greater than or equal to a second threshold; wherein the second ultrasonic sensor is a sensor in which the proportion of the scattered echoes in the received echoes is less than the first threshold in the sensor self-transmission and self-reception operating mode.

In the embodiment, in the self-transmission and self-reception operating mode, a sensor in the sensor group in which the proportion of the scattered echoes in the received echoes is greater than or equal to the first threshold is defined as a first ultrasonic sensor, and a sensor in the sensor group in which the proportion of the scattered echoes in the received echoes is less than the first threshold is defined as a second ultrasonic sensor. When a first ultrasonic sensor exists, the operating mode of the sensor group is switched from the self-transmission and self-reception mode to the self-transmission and other-reception mode. In the self-transmission and other-reception operating mode, the re-check is performed to judge whether the first ultrasonic sensor is wading. After performing the re-check on whether the first ultrasonic sensor is wading, it is judged whether the number of first ultrasonic sensors wading is greater than or equal to the number threshold. If the number is greater than or equal to the number threshold, it is determined that the vehicle body is wading. If the number is less than the number threshold, a second ultrasonic sensor in the sensor group transmits ultrasonic waves, and other ultrasonic sensors receive echoes of the ultrasonic waves transmitted by the second ultrasonic sensor. When the proportion of the scattered echoes in the echoes received by any one of the other ultrasonic sensors is greater than or equal to a second threshold, it is determined that the second ultrasonic sensor is wading.

In some embodiments, the first ultrasonic sensors include ultrasonic sensor A and ultrasonic sensor B. The second ultrasonic sensors include ultrasonic sensor C and ultrasonic sensor D. In the self-transmission and other-reception mode, after performing the re-check, it is confirmed that ultrasonic sensor A and ultrasonic sensor B are wading, that is, the number of first ultrasonic sensors wading is 2, and if the number threshold is 3 or 4, then the number of first ultrasonic sensors wading is less than the number threshold. The controller 10 may control ultrasonic sensor C and ultrasonic sensor D to transmit ultrasonic waves sequentially. For example, the controller first controls ultrasonic sensor C to transmit ultrasonic waves, and ultrasonic sensor A, ultrasonic sensor B, and ultrasonic sensor D receive echoes of the ultrasonic waves transmitted by ultrasonic sensor C. If any one of ultrasonic sensor A, ultrasonic sensor B, and ultrasonic sensor D receives echoes within a set time, and the proportion of the scattered echoes in the received echoes is greater than or equal to a second threshold, then it is determined that ultrasonic sensor C is wading. Then, the controller controls ultrasonic sensor D to transmit ultrasonic waves, and ultrasonic sensor A, ultrasonic sensor B, and ultrasonic sensor C receive echoes of the ultrasonic waves transmitted by ultrasonic sensor D. If any one of ultrasonic sensor A, ultrasonic sensor B, and ultrasonic sensor C receives echoes within the set time, and the proportion of the scattered echoes in the received echoes is greater than or equal to the second threshold, then it is determined that ultrasonic sensor D is wading.

When the sum of the number of first ultrasonic sensors wading and the number of second ultrasonic sensors wading is greater than or equal to the number threshold, it is determined that the vehicle body is wading.

Continuing with the above example, the second ultrasonic sensors transmit ultrasonic waves sequentially, that is, ultrasonic sensor C and ultrasonic sensor D transmit ultrasonic waves sequentially. In an example where the number threshold is 3, if it is determined that ultrasonic sensor A, ultrasonic sensor B, and ultrasonic sensor C and/or ultrasonic sensor D is wading, then it is determined that the vehicle body is wading. In an example where the number threshold is 4, if it is determined that ultrasonic sensor A, ultrasonic sensor B, ultrasonic sensor C, and ultrasonic sensor D is wading, then it is determined that the vehicle body is wading. A schematic diagram of vehicle body wading may be, for example, as shown in FIG. 4 or FIG. 5.

When the sum of the number of first ultrasonic sensors wading and the number of second ultrasonic sensors wading is less than the number threshold, it is determined that the vehicle body is not wading.

After it is determined that the vehicle body is not wading, the operating mode of the sensor group is switched from the sensor self-transmission and other-reception mode to the sensor self-transmission and self-transmission mode.

According to an embodiment of the present disclosure, when the number of first ultrasonic sensors wading is less than the number threshold, the second ultrasonic sensor transmits ultrasonic waves, other ultrasonic sensors receive echoes, and it is determined whether the second ultrasonic sensor is wading according to the proportion of the scattered echoes in the echoes, so that the accuracy of wading judgment can be improved.

In some embodiments, when it is determined that the vehicle body is wading, prompt information about vehicle body wading is output.

In the embodiment, the prompt information about vehicle body wading may be text, voice, or the like, and is not limited herein.

In some embodiments, the prompt information about vehicle body wading may be output via an in-vehicle multimedia system.

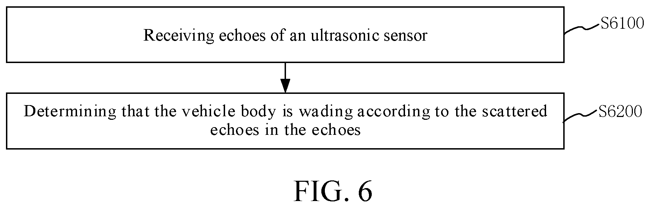

According to the wading sensing system 100 of the embodiment of the present disclosure, the embodiment of a wading sensing method is also provided in the present disclosure. FIG. 6 illustrates a wading sensing method according to some embodiments. The wading sensing method may be implemented by the controller 10 of the wading sensing system 100. As shown in FIG. 4, the wading sensing method may include the following steps S6100 and S6200.

Step S6100: echoes of an ultrasonic sensor are received.

The ultrasonic sensor in the step S6100 is configured to transmit ultrasonic waves and receive echoes of the ultrasonic waves.

The echoes are electrical signals corresponding to echoes received by an ultrasonic sensor, that is, the echoes received by ultrasonic sensor are acoustic wave signals, and the ultrasonic sensor converts the acoustic wave signals into electrical signals. The controller 10 receives the electrical signals corresponding to the echoes.

In some embodiments, the echoes of the ultrasonic sensor may be received in the self-transmission and self-reception operating mode.

In other embodiments, the echoes of the ultrasonic sensor may also be received in the self-transmission and other-reception operating mode.

Step S6200: it is determined that the vehicle body is wading according to the scattered echoes in the echoes.

In some embodiments, it may be determined that the vehicle body is wading when the proportion of the scattered echoes in the received echoes is greater than a threshold. The proportion may be an energy proportion or an amplitude proportion, and is not limited herein.

In an embodiment, it may be determined that the vehicle body is wading when the energy proportion of scattered echoes in the echoes is greater than a threshold. Alternatively, it may be determined that the vehicle body is wading when the amplitude proportion of scattered echoes in the echoes is greater than a threshold. The amplitude may be the maximum amplitude or an average amplitude.

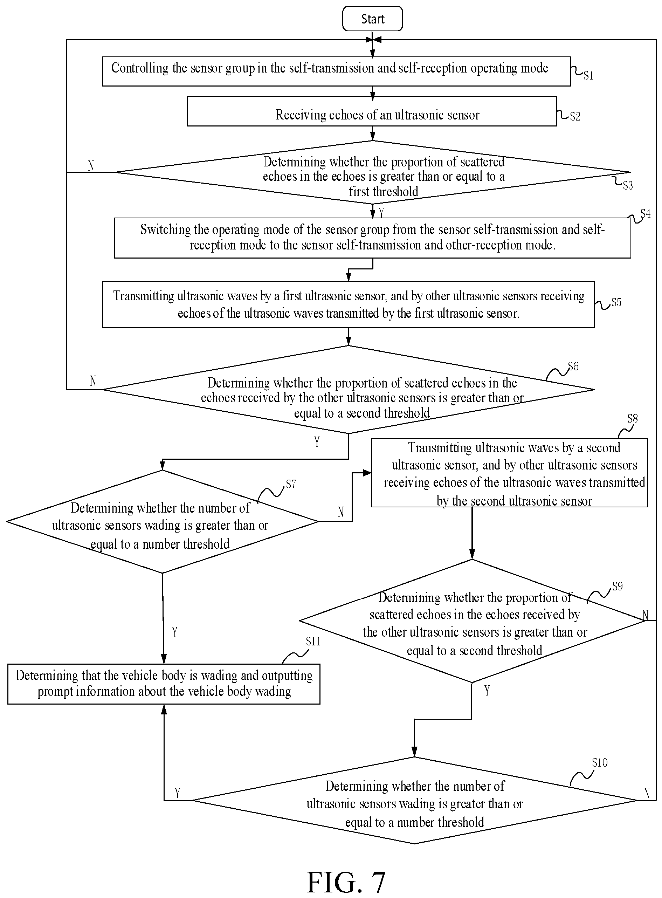

FIG. 7 illustrates a wading sensing method according to other embodiments. The method may also be implemented by the controller 10 of the wading sensing system 100. As shown in FIG. 7, the wading sensing method may include steps S1 to S11.

Step S1: it is controlled that a sensor group is in the self-transmission and self-reception operating mode.

In some embodiments, the wading sensing system 100 may, for example, include a forward sensor group 1 and a rearward sensor group 2. The two sensor groups operate independently. The forward sensor group 1 may, for example, include ultrasonic sensor A, ultrasonic sensor B, ultrasonic sensor C, and ultrasonic sensor D. The rearward sensor group 2 may, for example, include ultrasonic sensor A, ultrasonic sensor B, ultrasonic sensor C, and ultrasonic sensor D. In the self-transmission and self-reception mode, each ultrasonic sensor in the forward sensor group and the rearward sensor group respectively receives echoes of the ultrasonic waves transmitted by itself.

Step S2: echoes of an ultrasonic sensor are received.

In the embodiment, when the ultrasonic sensor receives echoes, the echoes are acoustic wave signals. The ultrasonic sensor converts the acoustic wave signals into electrical signals for transmission to the controller 10. The echoes received by the controller 10 are electrical signals corresponding to the echoes received by the ultrasonic sensor.

Step S3: it is determined whether the proportion of the scattered echoes in the echoes is greater than or equal to a first threshold; if yes, step S4 is executed; if no, step S1 is executed.

In the embodiment, the proportion of the scattered echoes in the echoes may be an energy proportion of the scattered echoes, an amplitude proportion of the scattered echoes, or the like, and is not limited herein.

In the embodiment, detection may be performed on whether the proportion of the scattered echoes in the echoes received by each ultrasonic sensor in the forward sensor group and the rearward sensor group is greater than or equal to the first threshold.

Step S4: the operating mode of the sensor group is switched from the sensor self-transmission and self-reception mode to the sensor self-transmission and other-reception mode.

In the embodiment, if a first ultrasonic sensor, in which the proportion of the scattered echoes in the echoes is greater than or equal to the first threshold, exists in the forward sensor group, the operating mode of the forward sensor group is switched to the self-transmission and other-reception mode, and the operating mode of the rearward sensor group remains the self-transmission and self-reception mode.

Step S5: a first ultrasonic sensor transmits ultrasonic waves, and other ultrasonic sensors receive echoes of the ultrasonic waves transmitted by the first ultrasonic sensor.

In some embodiments, if a single first ultrasonic sensor is arranged, for example, ultrasonic sensor A, then ultrasonic sensor A transmits ultrasonic waves, and ultrasonic sensor B, ultrasonic sensor C, and ultrasonic sensor D receive echoes of the ultrasonic waves transmitted by ultrasonic sensor A. If the first ultrasonic sensors are ultrasonic sensor A and ultrasonic sensor B, then in the self-transmission and other-reception mode, ultrasonic sensor A and ultrasonic sensor B may transmit ultrasonic waves sequentially. When ultrasonic sensor A transmits ultrasonic waves, the other ultrasonic sensors are ultrasonic sensor B, ultrasonic sensor C, and ultrasonic sensor D. When ultrasonic sensor B transmits ultrasonic waves, the other ultrasonic sensors are ultrasonic sensor A, ultrasonic sensor C, and ultrasonic sensor D.

Step S6: it is determined whether the proportion of the scattered echoes in the echoes received by the other ultrasonic sensors is greater than or equal to a second threshold; if yes, step S7 is executed; if no, step S1is executed.

Continuing with the above example, when ultrasonic sensor A in the forward sensor group transmits ultrasonic waves, if the proportion of the scattered echoes in the echoes received by any one of ultrasonic sensor B, ultrasonic sensor C, and ultrasonic sensor D within a set time is greater than or equal to the second threshold, then it is determined that ultrasonic sensor A is wading. Thereafter, step S7 is executed. If not, it is determined that ultrasonic sensor A is not wading, and thereafter, step S1 is executed.

Step S7: it is determined whether the number of ultrasonic sensors wading is greater than or equal to a number threshold; if yes, step S11 is executed; if no, step S8 is executed.

Step S8: a second ultrasonic sensor transmits ultrasonic waves, and other ultrasonic sensors receive echoes of the ultrasonic waves transmitted by the second ultrasonic sensor. Thereafter, step S9 is executed.

In an embodiment, the first ultrasonic sensors in the forward sensor group are ultrasonic sensor A and ultrasonic sensor B, and the second ultrasonic sensors are ultrasonic sensor C and ultrasonic sensor D. If the number of first ultrasonic sensors wading is less than the number threshold, then ultrasonic sensor C and ultrasonic sensor D transmit ultrasonic waves sequentially, and the corresponding other ultrasonic sensors receive echoes of the transmitted ultrasonic waves.

Step S9: it is determined whether the proportion of the scattered echoes in the echoes received by the other ultrasonic sensors is greater than or equal to a second threshold; if yes, step S10is executed; if no, step S1 is executed.

For example, the second ultrasonic sensors are ultrasonic sensor C and ultrasonic sensor D. When ultrasonic sensor C transmits ultrasonic waves, if the proportion of the scattered echoes in the echoes received by any one of ultrasonic sensor A, ultrasonic sensor B, and ultrasonic sensor D is greater than the second threshold, it is determined that ultrasonic sensor C is wading. When ultrasonic sensor D transmits ultrasonic waves, if the proportion of the scattered echoes in the echoes received by any one of ultrasonic sensor A, ultrasonic sensor B, and ultrasonic sensor C is greater than the second threshold, it is determined that ultrasonic sensor D is wading.

When it is determined that ultrasonic sensor C and/or ultrasonic sensor D is wading, step S10 is executed.

Step S10: it is determined whether the number of ultrasonic sensors wading is greater than or equal to a number threshold; if yes, step S11is executed; if no, step S1is executed.

Step S11: it is determined that the vehicle body is wading, and prompt information about the vehicle body wading is output.

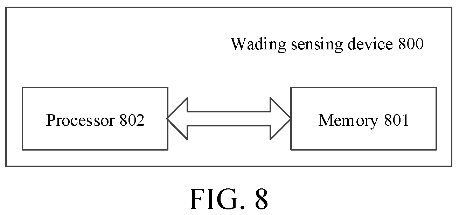

In some embodiments, as shown in FIG. 8, a wading sensing device 800 is further provided. The device 800 includes a memory 801 and a processor 802. The memory 801 is configured to store executable instructions, and the instructions are configured to control the processor 802 to perform the wading sensing method according to the embodiments of the present disclosure.

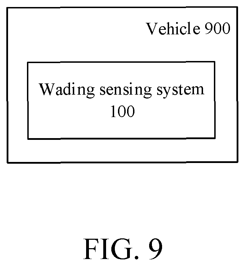

In some embodiments, a vehicle 900 is further provided, as shown in FIG. 9. The vehicle 900 includes the wading sensing system 100 as shown in FIG. 1.

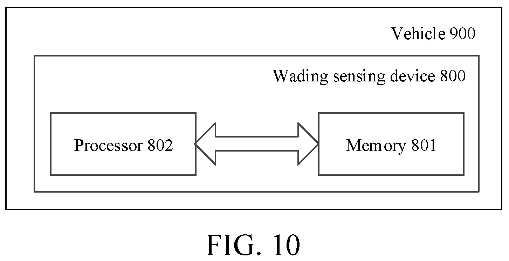

In other embodiments, as shown in FIG. 10, the vehicle 900 includes the wading sensing device as shown in FIG. 8.

The present invention may be a system, a method, and/or a computer program product. The computer program product may include a computer-readable storage medium having computer-readable program instructions stored thereon for causing a processor to implement various aspects of the present invention.

A computer-readable storage medium may be a tangible device that can retain and store instructions for use by an instruction execution device. The computer-readable storage medium may be, for example, without limitation, an electrical storage device, a magnetic storage device, an optical storage device, an electromagnetic storage device, a semiconductor storage device, or any suitable combination of the foregoing. More specific examples (a non-exhaustive list) of the computer-readable storage medium include: a portable computer disk, a hard disk, a random access memory (RAM), a read-only memory (ROM), an erasable programmable read-only memory (EPROM or Flash memory), a static random access memory (SRAM), a portable compact disk read-only memory (CD-ROM), a digital versatile disk (DVD), a memory stick, a floppy disk, a mechanically encoded device, such as punch cards or raised structures in a groove having instructions recorded thereon, and any suitable combination of the foregoing. As used herein, a computer-readable storage medium is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

The computer-readable program instructions described herein may be downloaded from a computer-readable storage medium to respective computing/processing devices, or downloaded to an external computer or an external storage device via a network, such as the Internet, a local area network, a wide area network, and/or a wireless network. The network may include copper transmission cables, optical fiber transmission, wireless transmission, routers, firewalls, switches, gateway computers, and/or edge servers. A network adapter card or a network interface in each computing/processing device receives the computer-readable program instructions from the network and forwards the computer-readable program instructions for storage in the computer-readable storage medium in the respective computing/processing device.

The computer program instructions for executing operations of the present invention may be assembly instructions, instruction set architecture (ISA) instructions, machine instructions, machine-dependent instructions, microcode, firmware instructions, state-setting data, or source code or object code written in any combination of one or more programming languages, including object-oriented programming languages such as Smalltalk, C++, and the like, as well as conventional procedural programming languages such as the "C" programming language or similar programming languages. The computer-readable program instructions may execute entirely on the user's computer, partly on the user's computer, as a stand-alone software package, partly on the user's computer and partly on a remote computer, or entirely on the remote computer or server. In scenarios involving a remote computer, the remote computer may be connected to the user's computer through any type of network, including a local area network (LAN) or a wide area network (WAN), or may be connected to an external computer (for example, through the Internet using an Internet service provider). In some embodiments, electronic circuits, such as programmable logic circuits, field programmable gate arrays (FPGAs), or programmable logic arrays (PLAs), are personalized/customized using state information of the computer-readable program instructions, and such electronic circuits can execute the computer-readable program instructions to implement various aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer-readable program instructions.

These computer-readable program instructions may be provided to a processor of a general-purpose computer, special-purpose computer, or other programmable data processing apparatus to produce a machine, such that the instructions, when executed by the processor of the computer or other programmable data processing apparatus, create means for implementing the functions/acts specified in one or more blocks of the flowchart illustrations and/or block diagrams. These computer-readable program instructions may also be stored in a computer-readable storage medium that causes a computer, programmable data processing apparatus, and/or other devices to operate in a particular manner, such that the computer-readable medium having instructions stored therein comprises an article of manufacture including instructions which implement various aspects of the functions/acts specified in one or more blocks of the flowchart illustrations and/or block diagrams.

The computer-readable program instructions may also be loaded onto a computer, other programmable data processing apparatus, or other devices to cause a series of operational steps to be performed on the computer, other programmable data processing apparatus, or other devices to produce a computer-implemented process, such that the instructions executed on the computer, other programmable data processing apparatus, or other devices implement the functions/acts specified in one or more blocks of the flowchart illustrations and/or block diagrams.

The flowchart and block diagrams in the accompanying drawings illustrate the architecture, functionality, and operation of possible implementations of systems, methods, and computer program products according to multiple embodiments of the present invention. In this regard, each block in the flowchart or block diagrams may represent a module, segment, or portion of instructions, which comprises one or more executable instructions for implementing the specified logical functions. In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by a dedicated hardware-based system that performs the specified functions or acts, or by combinations of dedicated hardware and computer instructions. It is well known to those skilled in the art that implementations through hardware, through software, and through combinations of software and hardware are all equivalent.

The embodiments of the present invention have been described above, and the foregoing description is illustrative, not exhaustive, and is not limited to the disclosed embodiments. Numerous modifications and variations will be apparent to those of ordinary skill in the art without departing from the scope and spirit of the described embodiments. The terminology used herein is chosen to best explain the principles of the embodiments, the practical application or technical improvement over technologies found in the marketplace, or to enable other ordinary skilled in the art to understand the embodiments disclosed herein. The scope of the present invention is defined by the appended claims.

## Claims

1. A vehicle wading sensing system (100), comprising:
an ultrasonic sensor, the ultrasonic sensor being configured to transmit ultrasonic waves and receive ultrasonic echoes; and
a controller (10), the controller being configured to determine that a vehicle body is wading according to scattered echoes in the echoes received by the ultrasonic sensor.

2. The wading sensing system according to claim 1, wherein the controller is configured to determine that the vehicle body is wading when a proportion of the scattered echoes in the echoes received by the ultrasonic sensor is greater than a threshold.

3. The wading sensing system according to claim 1 or 2, wherein the ultrasonic sensor is installed parallel to a horizontal reference plane of the vehicle.

4. The wading sensing system according to any one of claims 1 to 3, the wading sensing system comprising at least one sensor group, and the sensor group comprising at least two ultrasonic sensors (A, B, C, D) arranged on the same side of the vehicle body, and each ultrasonic sensor in the same sensor group having the same installation height.

5. The wading sensing system according to any one of claims 1 to 4, the wading sensing system comprising at least one sensor group from a forward sensor group (1) and a rearward sensor group (2), the forward sensor group comprising at least two ultrasonic sensors arranged on a front side of the vehicle body, and the rearward sensor group comprising at least two ultrasonic sensors arranged on a rear side of the vehicle body.

6. The wading sensing system according to any one of claims 1 to 5, wherein the controller is configured to:
when the sensor group is in a sensor self-transmission and self-reception operating mode, if the proportion of the scattered echoes in the echoes received by the ultrasonic sensor in the sensor group is greater than or equal to a first threshold, determine that the ultrasonic sensor is wading; and
when a number of ultrasonic sensors wading in the sensor group is greater than or equal to a number threshold, determine that the vehicle body is wading, wherein the number threshold is less than or equal to the number of ultrasonic sensors in the sensor group.

7. The wading sensing system according to any one of claims 1 to 6, wherein the number threshold is greater than or equal to half of the number of ultrasonic sensors in the sensor group.

8. The wading sensing system according to any one of claims 1 to 7, wherein, when the sensor group is in a sensor self-transmission and other-reception operating mode, a first ultrasonic sensor in the sensor group transmits ultrasonic waves, and other ultrasonic sensors receive echoes of the ultrasonic waves transmitted by the first ultrasonic sensor; and the controller is configured to determine whether the first ultrasonic sensor is wading according to scattered echoes in the echoes received by the other ultrasonic sensors, and determine that the vehicle body is wading when the number of ultrasonic sensors wading in the sensor group is greater than or equal to a number threshold; wherein the number threshold is less than or equal to the number of ultrasonic sensors in the sensor group.

9. The wading sensing system according to any one of claims 1 to 8, wherein, when the sensor group is in a sensor self-transmission and self-reception operating mode, an operating mode of the sensor group is switched from the sensor self-transmission and self-reception operating mode to the sensor self-transmission and other-reception operating mode when the first ultrasonic sensor exists; and the first ultrasonic sensor is a sensor in which the proportion of the scattered echoes in the received echoes is greater than or equal to the first threshold in the sensor self-transmission and self-reception operating mode.

10. The wading sensing system according to any one of claims 1 to 9, wherein the controller is configured to determine that the first ultrasonic sensor is wading when the proportion of the scattered echoes in the echoes received by any one of the other ultrasonic sensors is greater than or equal to a second threshold.

11. The wading sensing system according to any one of claims 1 to 10, wherein, when the number of first ultrasonic sensors determined to be wading is less than the number threshold, a second ultrasonic sensor in the sensor group transmits ultrasonic waves, and other ultrasonic sensors receive echoes of the ultrasonic waves transmitted by the second ultrasonic sensor; wherein the second ultrasonic sensor is a sensor in which the proportion of the scattered echoes in the received echoes is less than the first threshold in the sensor self-transmission and self-reception operating mode; and the controller is configured to determine that the second ultrasonic sensor is wading when the proportion of the scattered echoes in the echoes received by any one of the other ultrasonic sensors is greater than or equal to the second threshold.

12. A wading sensing method comprising:
receiving echoes of an ultrasonic sensor; wherein the ultrasonic sensor is configured to transmit ultrasonic waves and receive echoes of the ultrasonic waves; and
determining that the vehicle body is wading according to scattered echoes in the echoes.

13. A wading sensing device (800) comprising a memory (801) and a processor (802), the memory storing executable instructions, the instructions being configured to control the processor to perform the wading sensing method according to claim 12.

14. A vehicle (900) comprising the wading sensing system according to any one of claims 1 to 11, or the wading sensing device according to claim 13.
